# EUROPÄISCHE PATENTSCHRIFT

(11) **EP 4 257 756 B1**
(45) Veröffentlichungstag und Bekanntmachung des Hinweises auf die Patenterteilung: **30.07.2025**
(21) Anmeldenummer: 22214792.8
(22) Anmeldetag: 20.12.2022
(51) Int. Cl.: E02F 9/20

(54) **ARBEITSMASCHINE UND VERFAHREN ZUR BESTIMMUNG DER LASTVORGABE EINER BRENNSTOFFZELLE**
A WORKING MACHINE AND METHOD FOR DETERMINING THE LOAD SPECIFICATION OF A FUEL CELL
MACHINE DE TRAVAIL ET MÉTHODE DE DÉTERMINATION DE LA CHARGE D'UNE PILE À COMBUSTIBLE

(30) Priorität: 06.04.2022 DE 102022108239
(43) Veröffentlichungstag der Anmeldung: 11.10.2023
(73) Patentinhaber: Liebherr-Werk Bischofshofen GmbH, 5500 Bischofshofen (AT)
(72) Erfinder: EDER, Marco, 5700 Zell am See (AT); ECKER, Dominik, 5020 Salzburg (AT); GAPPMAIER, Rupert, 5541 Altenmarkt (AT); KIEGERL, Christoph, 5453 Werfenweng (AT); KNAPP, Hans, 5500 Bischofshofen (AT); UKIMERAJ, Leke, 5400 Hallein (AT)
(74) Vertreter: Herrmann, Uwe

(56) Entgegenhaltungen:
- EP-B1- 1 340 276
- EP-B1- 2 539 989
- US-A1- 2021 296 666

## Beschreibung

Die vorliegende Erfindung betrifft eine Arbeitsmaschine, vorzugsweise eine mobile Arbeitsmaschine und insbesondere Radlader und Teleskoplader, Bagger mit Rad- und Raupenfahrwerken, knickgelenkte Muldenkipper, sowie Planier- und Laderaupen, mit einem Brennstoffzellen-Antrieb, umfassend eine Brennstoffzelle sowie Bestimmungsmittel zur Bestimmung der Lastvorgabe der Brennstoffzelle, wobei die Arbeitsmaschine mehrere elektrische Verbraucher aufweist, die mit der Brennstoffzelle unmittelbar oder mittelbar zum Zwecke des Bezugs elektrischer Energie verbunden sind.

Aus dem Stand der Technik ist es bekannt, PKWs mit einem Brennstoffzellenantrieb auszuführen. Dabei wird Wasserstoff einer Brennstoffzelle zugeführt, der in einem chemischen Prozess mit Sauerstoff reagiert. Dabei wird die im Wasserstoff gespeicherte Energie als elektrische Energie freigegeben, die zum Antrieb eines Elektromotors und/oder zur Aufladung einer Batterie dient. Bei PKWs, die üblicherweise nur über einen Hauptantrieb verfügen, orientiert sich die Lastvorgabe der Brennstoffzelle meist am Vorgabewunsch, d.h. an der Gaspedalstellung des Fahrers.

Die Lastvorgabe ist der Leistungswert, mit dem die Brennstoffzelle betrieben werden soll.

Um die Lebensdauer der Brennstoffzelle zu verlängern, kann ein Einschränken der Leistungsdynamik und Abschaltvorgänge an der Brennstoffzelle und eine damit eingehende Verlagerung der Verbraucherleistung auf die Batterie zweckmäßig sein. Soll dem System hingegen die beste Effizienz abverlangt werden, muss die Verlustleistung an Brennstoffzelle und Batterie auf ein Minimum reduziert werden und die Betriebsstrategie angepasst werden.

Bei Arbeitsmaschinen, wie z.B. Radladern und anderen Maschinen in Erdbewegung und Materialumschlag, spielt diese Vorgehensweise eine untergeordnete Rolle, wenn diese über mehrere Hauptantriebe, wie z.B. Elektromotoren an den einzelnen Achsen oder einzelnen Rädern verfügen, da die Hauptantriebe einen voneinander unabhängigen Leistungsbedarf aufweisen.

Die US 2021/296666 A1 offenbart eine Arbeitsmaschine mit einer Steuervorrichtung zum Steuern einer Energieversorgungseinrichtung. Des Weiteren ist eine Lasterfassungseinheit vorhanden, mittels derer eine Lastmenge der Arbeitsmaschine erfasst bzw. ausgegeben wird. Basierend auf der Lastmenge wird mittels einer Bestimmungseinheit die Leistungsrate einer Brennstoffzelle bestimmt.

Der vorliegenden Erfindung liegt die Aufgabe zugrunde, eine Arbeitsmaschine der eingangs genannten Art dahingehend weiterzubilden, dass eine möglichst präzise Bestimmung der Lastvorgabe der Brennstoffzelle möglich ist.

Diese Aufgabe wird durch eine Arbeitsmaschine mit den Merkmalen des Anspruchs 1 gelöst.

Danach ist vorgesehen, dass die Bestimmungsmittel zur Bestimmung der Lastvorgabe der Brennstoffzelle so ausgebildet sind, dass in die Bestimmung der Lastvorgabe der Brennstoffzelle der Leistungsbedarf von wenigstens zwei der elektrischen Verbraucher einfließt. Vorzugsweise handelt es sich bei den elektrischen Verbrauchern um Hauptantriebe der Arbeitsmaschine, d.h. um solche Antriebe, die zum Vortrieb der Arbeitsmaschine, zur Bewegung der Arbeitsausrüstung und zur Lenkung der Maschine dienen.

Vorzugsweise weisen die mehreren Hauptantriebe jeweils einen unabhängigen Leistungsbedarf auf, so dass eine entsprechende Regelung bzw. Steuerung der Brennstoffzellen-Lastvorgabe vorteilhaft ist.

In einer Ausgestaltung der Erfindung sind erste Erfassungsmittel vorhanden, die ausgebildet sind, eine oder mehrere Maschinendaten zu erfassen, die Einfluss auf die Brennstoffzelle und/oder einer mit der Brennstoffzelle in elektrischer Verbindung stehenden Batterie haben, wobei die Bestimmungsmittel ausgebildet sind, die Maschinendaten in die Lastvorgabe der Brennstoffzelle einfließen zu lassen.

Die Maschinendaten können solche Daten sein, die Einfluss auf die Lebensdauer, Alterung, den Wirkungsgrad oder auf die Effizienz der Brennstoffzelle oder/und der Batterie haben.

An dieser Stelle wird darauf hingewiesen, dass der Begriff "Brennstoffzelle" im Rahmen der vorliegenden Erfindung sowohl die Brennstoffzelle als solche als auch eine Kombination der Brennstoffzelle mit einer Batterie bezeichnen kann, die von der Brennstoffzelle gespeist wird.

Der Begriff "Brennstoffzelle" kann im Rahmen der vorliegenden Erfindung alternativ oder außer der Batterie und/oder der Brennstoffzelle auch noch ein oder mehrere, vorzugsweise sämtliche, für den Betrieb eines Brennstoffzellenstapels und -systems erforderliche Komponenten und Aggregate umfassen, wie z.B. die Prozessluftherstellung und -befeuchtung und andere Systembestandteile sowie einen Spannungshochsetzsteller (DC-DC Wandler), der die leistungsabhängige, variable Ausgangsspannung des Stapels auf das Niveau der Batteriespannung hochsetzt.

Bei Arbeitsmaschinen gemäß der vorliegenden Erfindung können auch die Hydraulikantriebe die Funktion von Hauptantrieben einnehmen.

Das Verfahren zur Ermittlung der Lastvorgabe kann auf einem Fahrzeugsteuergerät betrieben werden, und damit ausgelagert und unabhängig von eigenständigen Komponentensteuergeräten des Brennstoffzellensystems und des Spannungshochsetzstellers (DC-DC Wandler), welche das Signal der Lastvorgabe vom Fahrzeugsteuergerät in Empfang nehmen, durchgeführt werden.

Die Arbeitsmaschine ist in einer Ausgestaltung mit einem solchen Fahrzeugsteuergerät ausgebildet.

Gemäß der Erfindung ist vorgesehen, dass Filtermittel vorhanden sind, die ausgebildet sind, den Leistungsbedarf der wenigstens zwei elektrischen Verbraucher zeitlich zu filtern. Dies bedeutet, dass der Leistungsbedarf der Verbraucher ermittelt wird und geprüft wird, ob diese zeitgleich oder zeitlich versetzt betrieben werden können, was Einfluss auf die Lastanforderung der Brennstoffzelle hat.

Weiterhin sind zweite Erfassungsmittel vorgesehen, die ausgebildet sind, zurückliegende Daten der Arbeitsmaschine zu erfassen, wobei die Bestimmungsmittel ausgebildet sind, die zurückliegenden Daten in die Lastvorgabe der Brennstoffzelle einfließen zu lassen.

Diese vergangenen, d.h. zeitlich zurückliegenden Daten umfassen den vergangenen Leistungsbedarf der Arbeitsmaschine oder von einen oder mehreren Verbrauchern der Arbeitsmaschine umfassen.

Denkbar ist es, dass die zweiten Erfassungsmittel ausgebildet sind, aus den zurückliegenden Daten Prognosedaten, d.h. eine Vorausschau für den Leistungsbedarf zu erstellen und die Bestimmungsmittel ausgebildet sind, die Prognosedaten in die Bestimmung der Lastvorgabe der Brennstoffzelle einfließen zu lassen.

Weiterhin kann vorgesehen sein, dass die Bestimmungsmittel ausgebildet sind, die dieser zugeführten Daten kaskadenförmig zu verarbeiten.

Vorzugsweise handelt es sich bei zumindest zwei der Verbraucher um Hauptantriebe der Arbeitsmaschine.

Alternativ oder zusätzlich kann es sich bei dem oder den Verbrauchern um Einzelverbraucher handeln, die keine Hauptantriebe der Arbeitsmaschine sind. Als Einzelverbraucher sind exemplarisch kleinere Hydraulikantriebe, Mittel zum Heizen und/oder Kühlen, Lüfter etc. zu nennen.

Die Arbeitsmaschine kann ein Fahrzeugsteuergerät aufweisen, das eine oder mehrere der vorgenannten Komponenten (Bestimmungsmittel, Filtermittel, Erfassungsmittel) aufweist und das somit ausgelagert und unabhängig von eigenständigen Komponentensteuergeräten des Brennstoffzellensystems und des Spannungshochsetzstellers (DC-DC Wandler) ist.

Die vorliegende Erfindung betrifft des Weiteren ein Verfahren zur Bestimmung der Lastvorgabe einer Brennstoffzelle einer Arbeitsmaschine, wobei die Arbeitsmaschine mehrere elektrische Verbraucher aufweist, die mit der Brennstoffzelle unmittelbar oder mittelbar zum Zwecke des Bezugs elektrischer Energie verbunden sind, wobei in die Bestimmung der Lastvorgabe der Brennstoffzelle der Leistungsbedarf von wenigstens zwei der elektrischen Verbraucher einfließt. Dabei handelt es sich vorzugsweise um zwei oder mehr als zwei Hauptantriebe der vorzugsweise mobilen Arbeitsmaschine.

Vorzugsweise ist vorgesehen, dass in die Bestimmung der Lastvorgabe Daten eines oder mehrerer der Ansprüche 2 bis 10 einfließen. Der Gegenstand der auf die Arbeitsmaschine ist somit auch optionaler Gegenstand des erfindungsgemäßen Verfahrens.

In einer Ausgestaltung der Erfindung ist vorgesehen, dass die Bestimmung der Lastvorgabe durch kaskadenförmige Verarbeitung von auf die Lastvorgabe Einfluss habenden Daten erfolgt.

Das erfindungsgemäße Verfahren zur Ermittlung der Lastvorgabe kann auf einem Fahrzeugsteuergerät betrieben werden, und damit ausgelagert und unabhängig von eigenständigen Komponentensteuergeräten des Brennstoffzellensystems und/oder Spannungshochsetzsteller (DC-DC Wandler), erfolgen.

In einer bevorzugten Ausgestaltung betrifft die Erfindung die Lastvorgabe für Brennstoffzellen-Antriebe in Arbeitsmaschinen mit mehreren Hauptantrieben, wobei neben dem Leistungsbedarf vorzugsweise aller einzelnen Hauptantriebe verschiedene Maschinenparameter zur Ermittlung der Lastvorgabe herangezogen und in einer Kaskadensteuerung verarbeitet werden.

Die wesentlichen Merkmale eines bevorzugten Ausführungsbeispiels sind:
- Bestimmung des Leistungsbedarfes bei Fahrzeugen mit mindestens zwei unabhängigen Hauptantrieben
- Bestimmung des Leistungsbedarfes aller weiteren Einzelverbraucher
- Ermittlung wesentlicher Maschinenparameter
- Betrachtung zurückliegender Messgrößen zur Einflussnahme in der Steuerung
- Verarbeitung der relevanten Größen in einer Kaskadensteuerung

Im Betrieb der Arbeitsmaschine kann es sinnvoll sein, verschiedene Betriebsstrategien zu verfolgen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Des Weiteren wird darauf hingewiesen, dass jedes Merkmal der vorliegenden Erfindung mit jedem anderen Merkmal oder mehreren anderen Merkmalen der vorliegenden Erfindung kombiniert vorliegen kann. Somit sind auch beliebige Merkmalskombinationen Gegenstand der vorliegenden Offenbarung.

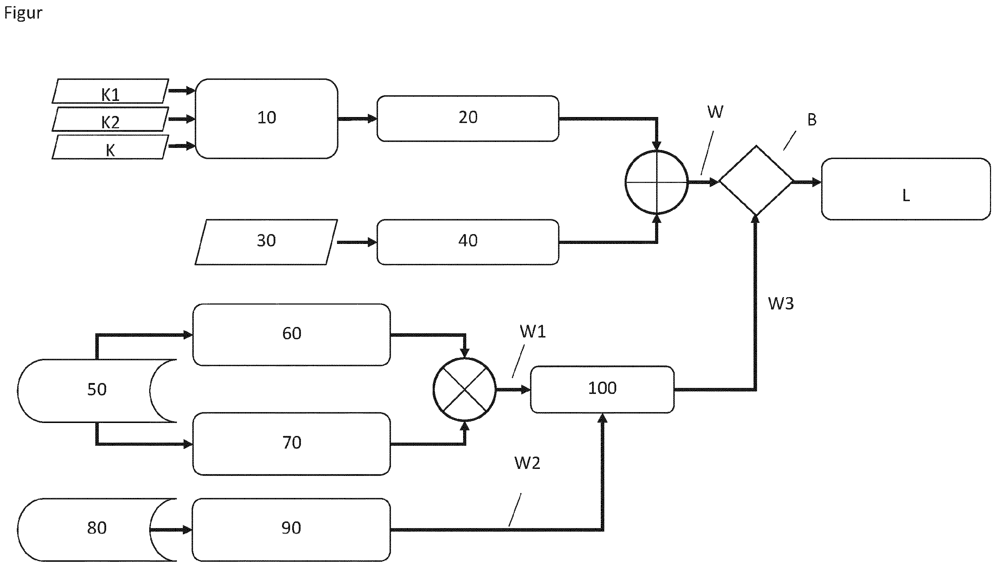

Weitere Einzelheiten und Vorteile der Erfindung werden anhand eines in der Zeichnung dargestellten Ausführungsbeispiels näher erläutert.

Die einzige Figur zeigt eine schematische Ansicht der Steuerung zur Bestimmung der Lastvorgabe einer in der Figur nicht dargestellten Brennstoffzelle einer Arbeitsmaschine.

Bei der Arbeitsmaschine kann es sich beispielsweise um einen Radlader oder Teleskoplader, Bagger mit Rad- und Raupenfahrwerken, knickgelenkte Muldenkipper, sowie Planier- und Laderaupen oder um eine sonstige Erdbewegungs- oder Baumaschine handeln.

Vorzugsweise handelt es sich bei der Arbeitsmaschine um eine mobile Arbeitsmaschine.

Die Bestimmung der Lastvorgabe L der Brennstoffzelle erfolgt in der Bestimmungseinheit B.

Im ersten Teil der Steuerung wird der Leistungsbedarf aller Lastverbraucher (Komponente 1: K1, Komponente 2: K2, Komponente n: K) ermittelt und anhand der Betriebsstrategie eine Gesamt-Leistungsanforderung 10 für die Brennstoffzelle errechnet. Anhand der zeitlichen Filterung 20 wird auf die Dynamik der Lastanforderung Einfluss genommen.

Wie dies weiter aus der Figur hervorgeht, erfolgt parallel dazu der Abgriff wesentlicher Maschinenparameter wie dem Ladezustand der Batterie sowie dessen Änderung. Das Bezugszeichen 30 kennzeichnet die Zustandsgrößen der Batterie.

Um die Batterie in den zulässigen Grenzen zu betreiben, bestimmt ein Regler 40 eine zusätzliche Leistungsanforderung zur Kompensation, welche bei der Berechnung der Leistungs- bzw. Lastanforderung L der Brennstoffzelle beaufschlagt wird, wie dies aus der Figur hervorgeht.

Der auf diese Weise kompensierte Wert ist in der Figur mit W bezeichnet. Der Wert W wird den Bestimmungsmitteln B zugeführt.

Der zweite Teil der Steuerung nimmt Einfluss auf die Betriebs-Strategie. Dazu werden mittels der ersten Erfassungsmittel diverse Maschinen- bzw. Komponentendaten 50 ausgelesen bzw. gemessen, welche Aufschluss über Alterungsvorgänge der Brennstoffzelle und Batterie geben.

Das Bezugszeichen 60 kennzeichnet den Wirkungsgrad bzw. die Effizienz des Gesamtsystems Brennstoffzelle und Batterie.

Mit 70 ist die Lebensdauer bzw. Alterung des Gesamtsystems Brennstoffzelle und Batterie gekennzeichnet. Wie aus der Figur ersichtlich, werden diese Werte zusammengeführt und bilden einen ersten Teil W1 der Korrektur 100 des der Bestimmungsmitteln B zugeführten Wertes W, der basierend auf den Blöcken 20, 40 gebildet wird.

Je nach gewählter Betriebsstrategie wird dann ein Vorgabewert zur Leistung ermittelt, der auf die Gesamtlast-Anforderung L der Brennstoffzelle hinzu korrigiert wird. Der Korrekturwert ist in der Figur mit W1 bezeichnet.

Im dritten Teil wird die Fahrzeuganwendung bzw. dessen Einsatzbedingungen berücksichtigt. Anhand zurückliegender Daten der Maschine, wie z.B. anhand des zurückliegenden Leistungsbedarfs der Arbeitsmaschine 80, die über einen definierten Zeitraum mittels der zweiten Erfassungsmittel aufgezeichnet werden, ist es möglich, wiederkehrende Arbeitsmuster zu erkennen. Durch eine entsprechende Prädiktion von Arbeitsmustern (vgl. Bezugszeichen 90: Voraus-Schau Leistungsbedarf der Arbeitsmaschine) kann auf die Betriebsstrategie Einfluss genommen werden und die Brennstoffzellenleistung frühzeitig an den erforderlichen Leistungsbedarf angepasst werden.

Sobald Arbeitsmuster erkannt und prädiktiert werden, kann im dritten Teil der Steuerung durch eine weitere Korrektur die Lastanforderung der Brennstoffzelle angepasst werden. Der Korrekturwert ist mit W2 bezeichnet.

Beide Korrekturwerte W1 und W2 werden in der Korrektureinheit 100 zusammengeführt und basierend darauf wird ein finaler Korrekturwert W3 bestimmt, der den Bestimmungsmitteln B zugeführt wird.

In den Bestimmungsmitteln B erfolgt somit eine Korrektur des Wertes W mittels des Korrekturwertes W3. Basierend auf diesen beiden Werten (W und W3) ermitteln die Bestimmungsmittel B dann letztlich die Lastanforderung L, mit der Brennstoffzelle tatsächlich betrieben wird.

Die vorgenannte chronologische Aufzählung der einzelnen Steuerungsblöcke ist nicht zwingend. Von der Erfindung ist auch jede andere Abfolge der genannten Schritte umfasst.

Vorteile eines bevorzugten Ausführungsbeispiels sind im folgenden wiedergegen:
Die Erfindung betrifft vorzugsweise ein Verfahren zur Bestimmung der Leistungsanforderung zum Betrieb eines Brennstoffzellen-Antriebes in einem Fahrzeug, wobei das Fahrzeug über mehrere elektrische Hauptantriebe verfügt, deren Einzelleistungsbedarfe ermittelt werden und in einer Fahrzeugsteuerung zur Ermittlung eines Fahrzeug-Gesamtleistungsbedarfes herangezogen werden.

Vorzugsweise handelt es sich um ein Fahrzeug mit mehreren elektrischen Hauptantrieben, wobei es sich bei dem Fahrzeug um eine mobile Arbeitsmaschine handelt.

Erfindungsgemäß erfolgt die Bestimmung des Fahrzeug-Gesamtleistungsbedarfes aus den Daten der einzelnen Antriebe mit entsprechender zeitlicher Filterung.

Es finden Batterie-Zustandsgrößen wie Ladezustand und dessen Änderung zur Korrektur der Leistungsanforderung Anwendung.

Es erfolgt eine Berücksichtigung der Wirkungsgradkette der Komponenten des Brennstoffzellen-elektrischen Antriebes, vorzugsweise der Batterie, der Brennstoffzelle und Gleichstromsteller, zur Korrektur der Leistungsanforderung.

Es erfolgt des Weiteren eine Berücksichtigung der Alterung der Komponenten des Brennstoffzellen-elektrischen Antriebes, vorzugsweise der Batterie und der Brennstoffzelle, zur Korrektur der Leistungsanforderung.

Es erfolgt eine Optimierung und Verfeinerung der Brennstoffzellen-Leistungsanforderung durch das Zunutze machen eines Lastprädiktionsverfahrens, das die Betriebshistorie des Fahrzeuges beurteilt, mit dem Ziel, Energieverbrauch und Alterung zu verringern.

## Patentansprüche

1. Arbeitsmaschine mit einem Brennstoffzellen-Antrieb, umfassend eine Brennstoffzelle sowie Bestimmungsmittel zur Bestimmung der Lastvorgabe der Brennstoffzelle, wobei die Arbeitsmaschine mehrere elektrische Verbraucher aufweist, die mit der Brennstoffzelle unmittelbar oder mittelbar zum Zwecke des Bezugs elektrischer Energie verbunden sind, wobei die Bestimmungsmittel ausgebildet sind, so dass in die Bestimmung der Lastvorgabe der Brennstoffzelle der Leistungsbedarf von wenigstens zwei der elektrischen Verbraucher einfließt, **dadurch gekennzeichnet, dass** Filtermittel vorhanden sind, die ausgebildet sind, den Leistungsbedarf der wenigstens zwei elektrischen Verbraucher zeitlich zu filtern und dass zweite Erfassungsmittel vorgesehen sind, die ausgebildet sind, zurückliegende Daten der Arbeitsmaschine zu erfassen, wobei die Bestimmungsmittel ausgebildet sind, die zurückliegenden Daten in die Lastvorgabe der Brennstoffzelle einfließen zu lassen, und wobei die zurückliegenden Daten den vergangenen Leistungsbedarf der Arbeitsmaschine oder den vergangenen Leistungsbedarf von einen oder mehreren Verbrauchern der Arbeitsmaschine umfassen .

2. Arbeitsmaschine nach Anspruch 1, **dadurch gekennzeichnet, dass** erste Erfassungsmittel vorhanden sind, die ausgebildet sind, eine oder mehrere Maschinendaten zu erfassen, die Einfluss auf die Brennstoffzelle und/oder einer mit der Brennstoffzelle in elektrischer Verbindung stehenden Batterie haben, und dass die Bestimmungsmittel ausgebildet sind, die Maschinendaten in die Lastvorgabe der Brennstoffzelle einfließen zu lassen.

3. Arbeitsmaschine nach Anspruch 2, **dadurch gekennzeichnet, dass** die Maschinendaten solche Daten sind, die Einfluss auf die Lebensdauer, Alterung, den Wirkungsgrad und/oder auf die Effizienz der Brennstoffzelle und/oder der Batterie haben.

4. Arbeitsmaschine nach einem der vorhergehenden Ansprüche , **dadurch gekennzeichnet, dass** die zweiten Erfassungsmittel ausgebildet sind, aus den zurückliegenden Daten Prognosedaten für den Leistungsbedarf zu erstellen und dass die Bestimmungsmittel ausgebildet sind, die Prognosedaten in die Bestimmung der Lastvorgabe der Brennstoffzelle einfließen zu lassen.

5. Arbeitsmaschine nach einem der vorhergehenden Ansprüche, **dadurch gekennzeichnet, dass** die Bestimmungsmittel ausgebildet sind, die dieser zugeführten Daten kaskadenförmig zu verarbeiten.

6. Arbeitsmaschine nach einem der vorhergehenden Ansprüche, **dadurch gekennzeichnet, dass** es sich bei zumindest zwei der Verbraucher um Hauptantriebe der Arbeitsmaschine handelt und/oder dass es sich bei dem oder den Verbrauchern um Einzelverbraucher handelt, die keine Hauptantriebe der Arbeitsmaschine sind.

7. Arbeitsmaschine nach einem der vorhergehenden Ansprüche, **dadurch gekennzeichnet, dass** ein Fahrzeugsteuergerät vorhanden ist, das eine oder mehrere der vorgenannten Komponenten aufweist und das ausgelagert und unabhängig von eigenständigen Komponentensteuergeräten der Brennstoffzelle und/oder der Batterie und/oder des Brennstoffzellensystems und/oder des Spannungshochsetzstellers (DC-DC Wandler) ist.

8. Verfahren zur Bestimmung der Lastvorgabe einer Brennstoffzelle einer Arbeitsmaschine, wobei die Arbeitsmaschine mehrere elektrische Verbraucher aufweist, die mit der Brennstoffzelle unmittelbar oder mittelbar zum Zwecke des Bezugs elektrischer Energie verbunden sind, wobei in die Bestimmung der Lastvorgabe der Brennstoffzelle der Leistungsbedarf von wenigstens zwei der elektrischen Verbraucher einfließt, **dadurch gekennzeichnet, dass** der Leistungsbedarf der wenigstens zwei elektrischen Verbraucher zeitlich gefiltert wird und dass zurückliegende Daten der Arbeitsmaschine erfasst werden, und die zurückliegenden Daten in die Lastvorgabe der Brennstoffzelle einfließen, wobei die zurückliegenden Daten den vergangenen Leistungsbedarf der Arbeitsmaschine oder den vergangenen Leistungsbedarf von einen oder mehreren Verbrauchern der Arbeitsmaschine umfassen ..

9. Verfahren nach Anspruch 8, **dadurch gekennzeichnet, dass** in die Bestimmung der Lastvorgabe Daten eines oder mehrerer der Ansprüche 2 bis 6 einfließen.

10. Verfahren nach Anspruch 8 oder 9, **dadurch gekennzeichnet, dass** die Bestimmung der Lastvorgabe durch kaskadenförmige Verarbeitung von auf die Lastvorgabe Einfluss habenden Daten erfolgt.

## Claims

1. A work machine having a fuel cell drive comprising a fuel cell and determination means for determining the load demand of the fuel cell, wherein the work machine has a plurality of electrical consumers that are directly or indirectly connected to the fuel cell for the purpose of obtaining electrical energy, wherein the determination means are configured such that the power requirements of at least two of the electrical consumers enter into the determination of the load demand of the fuel cell, **characterized in that** that filter means are present that are configured to filter the power requirements of the at least two electrical consumers over time; and **in that** in that second detection means are provided that are configured to detect historical data of the work machine with the determination means being configured to allow the historical data to enter into the load demand of the fuel cell, and with historical data comprising the past power requirement of the work machine or the past power requirement of one or more consumers of the work machine.

2. A work machine in accordance with claim 1, **characterized in that** first detection means are present that are configured to detect one or more pieces of machine data that have an influence on the fuel cell and/or on a battery electrically connected to the fuel cell; and **in that** the determination means are configured to allow the machine data to enter into the load demand of the fuel cell.

3. A work machine in accordance with claim 2, **characterized in that** the machine data are those data that have an influence on the service life, aging, degree of efficiency, and/or on the efficiency of the fuel cell and/or of the battery.

4. A work machine in accordance with one of the preceding claims, **characterized in that** the second detection means are configured to prepare forecast data from the historical data; and **in that** the determination means are configured to allow the forecast data to enter into the determination of the load demand of the fuel cell.

5. A work machine in accordance with one of the preceding claims, **characterized in that** the determination means are configured to process these supplied data in a cascade-like manner.

6. A work machine in accordance with one of the preceding claims, **characterized in that** that at least two of the consumers are main drives of the work machine; and/or **in that** the consumer or consumers are individual consumers that are not main drives of the work machine.

7. A work machine in accordance with one of the preceding claims, **characterized in that** a vehicle control unit is present that has one or more of the aforesaid components and that is outsourced and is independent of standalone component control units of the fuel cell and/or of the battery and/or of the fuel cell system and/or of the voltage boost converter (DC-DC converter).

8. A method of determining the load demand of a fuel cell of a work machine, wherein the work machine has a plurality of electrical consumers that are directly or indirectly connected to the fuel cell for the purpose of obtaining electrical energy, wherein the power requirements of at least two of the electrical consumers enter into the determination of the load demand of the fuel cell, **characterized in that** r the power requirements of the at least two electrical consumers are filtered over time; and **in that** historical data of the work machine are detected and the historical data enter into the load demand of the fuel cell, with the historical data comprising the past power requirement of the work machine or the past power requirement of one or more consumers of the work machine.

9. A method in accordance with claim 8, **characterized in that** data of one or more of claims 2 to 6 enter into the determination of the load demand.

10. A method in accordance with claim 8 or claim 9, **characterized in that** the determination of the load demand takes place by a cascade-like processing of data having an influence on the load demand.

## Revendications

1. Machine de travail comportant un entraînement à pile à combustible, comprenant une pile à combustible ainsi que des moyens de détermination pour déterminer la spécification de charge de la pile à combustible, la machine de travail comportant plusieurs consommateurs électriques qui sont reliés directement ou indirectement à la pile à combustible à des fins de prélèvement d'énergie électrique, les moyens de détermination étant conçus de telle sorte que le besoin en puissance d'au moins deux des consommateurs électriques est pris en compte dans la détermination de la spécification de charge de la pile à combustible, **caractérisée par** la présence de moyens de filtrage qui sont conçus pour appliquer un filtre temporel au besoin en puissance des au moins deux consommateurs électriques et par des seconds moyens de collecte qui sont conçus pour collecter des données antérieures de la machine de travail, les moyens de détermination étant conçus pour prendre en compte les données antérieures dans la spécification de charge de la pile à combustible, et les données antérieures comprenant le besoin en puissance passé de la machine de travail ou le besoin en puissance passé d'un ou de plusieurs consommateurs de la machine de travail.

2. Machine de travail selon la revendication 1, **caractérisée par** la présence de premiers moyens de collecte qui sont conçus pour collecter une ou plusieurs données de machine qui ont une influence sur la pile à combustible et/ou une batterie en liaison électrique avec la pile à combustible, et en ce que les moyens de détermination sont conçus pour prendre en compte les données de machine dans la spécification de charge de la pile à combustible.

3. Machine de travail selon la revendication 2, **caractérisée en ce que** les données de machine sont des données qui ont une influence sur la durée de vie, le vieillissement, le rendement et/ou l'efficience de la pile à combustible et/ou de la batterie.

4. Machine de travail selon l'une des revendications précédentes, **caractérisée en ce que** les seconds moyens de collecte sont conçus pour créer, à partir des données antérieures, des données prévisionnelles pour le besoin en puissance et **en ce que** les moyens de détermination sont conçus pour prendre en compte les données prévisionnelles dans la détermination de la spécification de charge de la pile à combustible.

5. Machine de travail selon l'une des revendications précédentes, **caractérisée en ce que** les moyens de détermination sont conçus pour traiter en cascade les données qui leur sont fournies.

6. Machine de travail selon l'une des revendications précédentes, **caractérisée en ce qu'**au moins deux des consommateurs sont des entraînements principaux de la machine de travail et/ou **en ce que** le ou les consommateurs sont des consommateurs individuels qui ne sont pas des entraînements principaux de la machine de travail.

7. Machine de travail selon l'une des revendications précédentes, **caractérisée par** la présence d'un appareil de commande de véhicule qui comporte un ou plusieurs des composants susmentionnés et qui est externalisé et indépendant d'appareils de commande de composant autonomes de la pile à combustible et/ou de la batterie et/ou du système de pile à combustible et/ou du convertisseur élévateur de tension (convertisseur CC-CC).

8. Procédé de détermination de la spécification de charge d'une pile à combustible d'une machine de travail, la machine de travail comportant plusieurs consommateurs électriques qui sont reliés directement ou indirectement à la pile à combustible à des fins de prélèvement d'énergie électrique, le besoin en puissance d'au moins deux des consommateurs électriques étant pris en compte dans la détermination de la spécification de charge de la pile à combustible, **caractérisé en ce qu'**un filtre temporel est appliqué au besoin en puissance des au moins deux consommateurs électriques et **en ce que** des données antérieures de la machine de travail sont collectées, et les données antérieures sont prises en compte dans la spécification de charge de la pile à combustible, les données antérieures comprenant le besoin en puissance passé de la machine de travail ou le besoin en puissance passé d'un ou de plusieurs consommateurs de la machine de travail.

9. Procédé selon la revendication 8, **caractérisé en ce que** des données d'une ou de plusieurs des revendications 2 à 6 sont prises en compte dans la détermination de la spécification de charge.

10. Procédé selon la revendication 8 ou 9, **caractérisé en ce que** la détermination de la spécification de charge est effectuée par un traitement en cascade de données ayant une influence sur la spécification de charge.
